# EUROPEAN PATENT APPLICATION

(11) **EP 0 863 687 A2**
(43) Date of publication of application: **09.09.1998**
(21) Application number: 98103711.2
(22) Date of filing: 03.03.1998
(51) Int. Cl.: H04Q 11/04

(54) **ATM switch and error processing method employed therein**

(30) Priority: 03.03.1997 JP 48015/97
(71) Applicant: Toshiba Corporation, Kawasaki-shi, Kanagawa-ken (JP)
(72) Inventor: Fujisawa, Toshio, Yokohama-shi, Kanagawa-ken (JP); Hasegawa, Jun, Yokohama-shi, Kanagawa-ken (JP)
(74) Representative: Zangs, Rainer E., Dipl.-Ing.

(57) **Abstract**

An ATM switch and an error processing method in the ATM switch are configured to reliably store and investigate contents of error information of cells without increasing the expense for installment. By making a queue to which cells classified by a cell processor are sequentially connected until the cell are output from a circuit associate portion in response to an instruction from a queue controller of the circuit associate portion, an error queue for cumulatively storing error cells is formed in a cell buffer for temporary storage of cells in addition to a normal queue for cumulatively storing normal cells, so as to cumulatively store normal cells and error cells.

## Description

### BACKGROUND OF THE INVENTION

This invention relates to an ATM switch and an error processing method employed therein, and more particularly, to an error processing method in input/output circuit associate portions of an ATM switch and constructions of the input/output circuit associate portions.

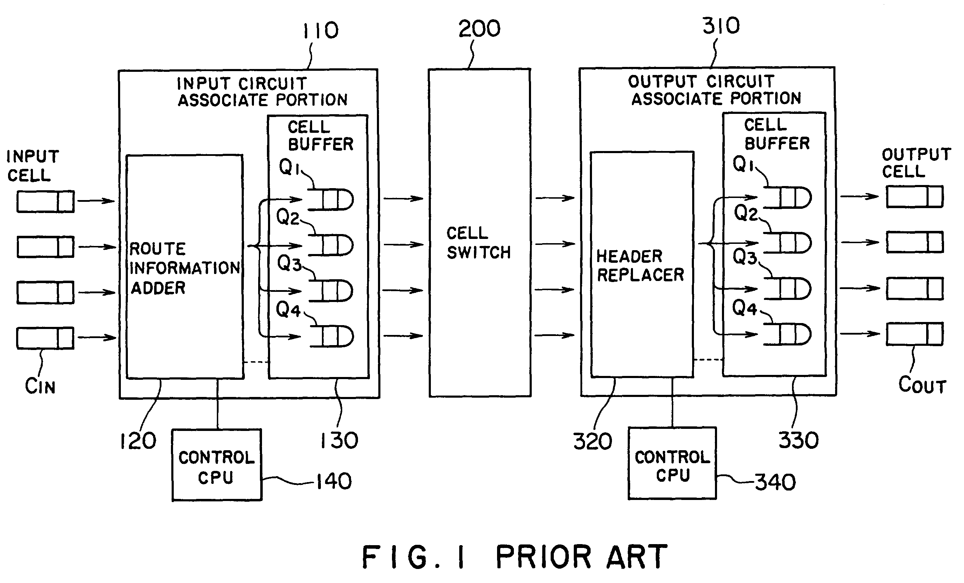

Fig. 1 is a block diagram of an ATM switch which includes three portions, namely, input circuit associate portion 110, cell switch 200, and output circuit associate portion 310. The input circuit associate portion 110 includes a route information adder 120 for applying certain processing to cells and a cell buffer 130 for temporarily storing cells. The output circuit associate portion 310 includes a header replacer 320 as a cell processor, and a cell buffer 330.

The input circuit associate portion 110 adds to input cells, in the route information adder 120, route information referred to in the cell switch 200 to determine the output position of each cell, and index information referred to in the output side. The cell switch 200 determines the destination of a cell, based on the route information added to the cell, and delivers the cell to a corresponding output circuit associate portion 310. The output circuit associate portion 310 executes, in the header replacer 320, deletion of the route information and replacement of the circuit number recorded in the header portion of the cell, and delivers the cell as an output cell C_{OUT} to an output port.

The input circuit associate portion 110 and the output circuit associate portion 310 (simply called circuit associate portions when the input circuit associate portion and the output circuit associate portion need not be distinguished) include cell buffers 130 and 330, and all cells passing through the circuit associate portions are once stored in the cell buffers.

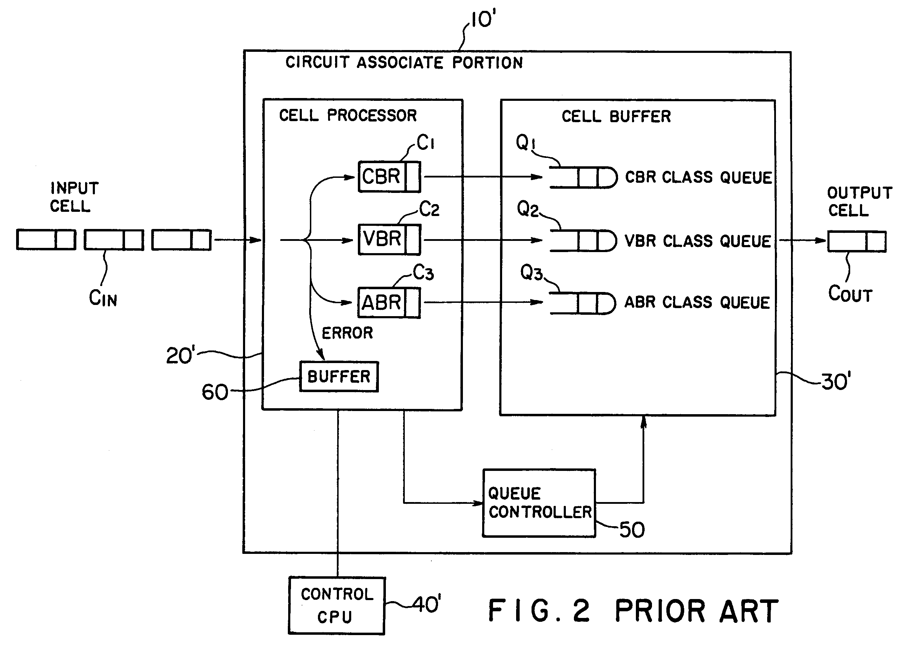

Fig. 2 is a block diagram of a conventional circuit associate portion in an ATM switch of a type having three-step circuit classes.

A circuit associate portion 10' includes a cell processor 20' for processing cells in a predetermined manner, a cell buffer 30' for temporarily storing and accumulating cells, and a queue controller 50 for management of queues, such as selection of a queue, instruction of the order of cells to be extracted from a queue, and so on. Further connected to the cell processor 20' is a control CPU (central processing unit) 40' for reading out error information of cells. All input cells C_{IN} introduced into the circuit associate portion 10' are processed in a predetermined manner in the cell processor 20', then classified into different classes prepared for different qualities of circuits to which input cells C_{IN} should be delivered and output ports of the routing switch (for example, call C1 of the CBR (constant bit rate) class, cell C2 of the VBR (variable bit rate) class and cell C3 of the ABR (available bit rate) class) so that the cells are controlled in form of queues (for example, CBR class queue Q1, VBR class queue Q2 and ABR class queue Q3), and once stored cumulatively in the cell buffer 30'.

Cells accumulated in the cell buffer 30' of the input circuit associate portion are read out in the order corresponding to the quality levels of the queues to which they are connected, and are delivered to the routing switch. When the cells accumulated in the cell buffer 30' are taken out, a priority is given to a cell connected to a queue of a class with a higher quality level.

A cell is again input into the output circuit associate portion from an output port determined by the routing switch. Cells accumulated in the cell buffer 30' of the output circuit associate portion are read out in the sequence corresponding to circuit velocities and/or circuit qualities of output transmission lines for transmitting the cells.

In both input and output circuit associate portions, the order of cells taken out from a queue for a class is determined, depending upon a list structure collecting combinations of cell buffer addresses and next pointers. The queue controller 50 for controlling queues preferentially selects a higher class queue, and instructs extraction of a cell therefrom.

Each cell is sent out to the output transmission line after the circuit information in its header portion is replaced with another in the cell processor 20' of the output circuit associate portion.

When any error occurs during processing of a cell in a conventional ATM switch, such as parity error, absence of an address in the accessed buffer, or the like, for example, there are some error processing methods, namely, a method for investigating the content of an error-contained cell after interrupting the ordinary operation of the ATM switch, and a method for storing minimum error information and sending out or discarding the cell. Both these methods involve the following problems.

When ordinary operations of the ATM switch are interrupted to investigate the content of the cell containing an error, the control CPU 40' can certainly read the content of the cell. However, interruption of ordinary processing causes a decrease in throughput of the ATM switch.

In contrast, if the ATM switch does not interrupt its ordinary operations when any error occurs, the error-contained cell is sent out or thrown away to the exterior of the ATM switch. However, without storage of the content of the error-contained cell as error information, it is not definitely known whether the error is contained in the information recorded in the cell or in the information referred to on the basis of the information recorded in the cell. For example, if the circuit number, etc. used by the cell is recorded in the header portion of the cell, but an error has been derived from route information added to the cell in response to the circuit number, then it cannot be known whether the circuit number recorded in the cell is erroneous or the route information referred to on the basis of the circuit number is erroneous, unless the content of the cell is stored. In an ATM switch, considering that information generated within the switch is referred to in some portions in the switch, the content of a cell causing an error must be stored in order to know the source of the error.

Therefore, when normal processing is not interrupted even when an error occurs, it is necessary to store the content of a cell in a storage device having the capacity of a single cell, such as buffer 60 in Fig. 2, in order for the control CPU 40' to read the content of the error-contained cell.

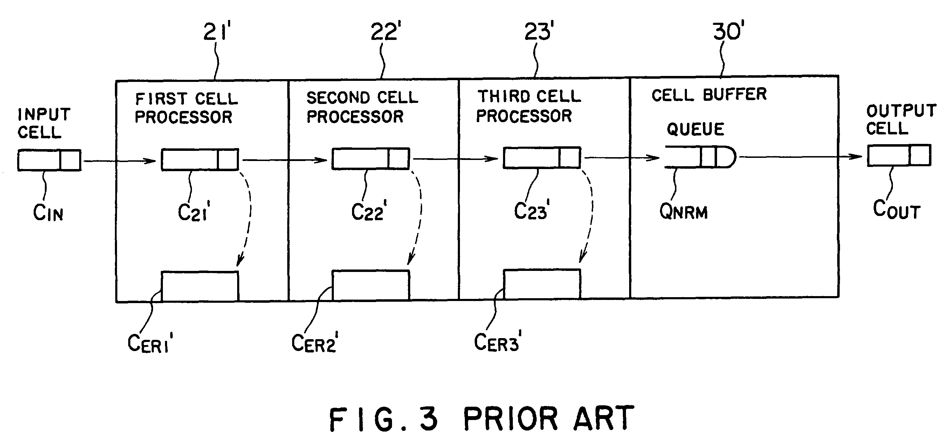

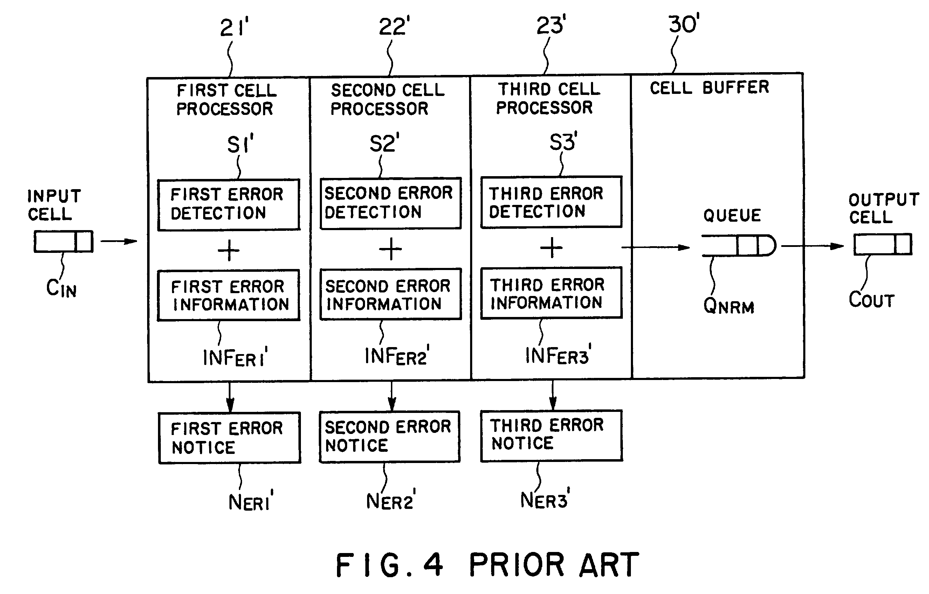

Fig. 3 is a diagram for schematically showing the construction of the cell processor and the cell buffer for pipeline processing of cells by the circuit associate portion of the ATM switch, and Fig. 4 is a diagram schematically showing the process of the pipeline processing of cells by the cell processor and the cell buffer in the circuit associate portion of the ATM switch. The circuit associate portion of Figs. 3 and 4 has a cell processor including a first cell processor 21', second cell processor 22' and third cell processor 23' and a cell buffer 30'.

As shown in Fig. 3, when the ATM switch is configured for pipeline processing of cells, storage devices each having the capacity of a cell must be provided in different locations where different kinds of processing are executed. That is, when errors occur in cells C21', C22' and C23' under processing in the first, second and third cell processors 21', 22' and 23', they must be stored as error cells C_{ER1}', C_{ER2}' and C_{ER3}', and a storage device having the capacity of one cell must be provided in each of the cell processors 21' to 23'.

The process of the processing is as shown in Fig. 4 where first, second and third error detections S1', S2', S3' are done in first, second and third cell processors 21', 22', 23', and a notice is given as N_{ER1}', N_{ER2}', N_{ER3}' regarding first, second and third error information INF_{ER1}', INF_{ER2}' and INF_{ER3}' found out by the error detections. Therefore, the operation for notifying and reading errors is complicated, and results in a delay of the entire operation of the ATM switch.

Additionally, since another error may occur consecutively in the same location before the control CPU 40' reads out the content of a prior error-contained cell, each of the cell processors 21', 22', 23' needs a capacity for storing some cells. Therefore, for more reliable storage of contents of error-contained cells, a large capacity is required for each storage device, and it inevitably increases the expense for the system. Nevertheless, if the number of consecutive errors exceeds the capacitance of the storage device, it is still impossible to fully identify the relation between the contents of the stored cells and the natures of the errors.

### SUMMARY OF THE INVENTION

It is therefore a first object of the present invention to provide an error processing method therefor using a structure capable of reliably storing and investigating contents of error information of cells without increasing the expense for the system.

It is a second object of the present invention to provide an ATM switch in which the error processing method is employed.

According to a first aspect of the present invention, there is provided an error processing method in an ATM switch comprising:
a first process for detecting an error derived from a cell introduced into a circuit associate portion in a cell processor of said circuit associate portion, and for classifying an error cell causing said error from normal cells; and
a second process for making a queue to which said cell classified by said cell processor is connected until said cell is output from said circuit associate portion in response to an instruction from a queue controller of said circuit associate portion, to form an error queue for storing said and other error cells in addition to a normal queue for storing said and other normal cells, and to cumulatively store said normal cells and said error cells.

According to a second aspect of the present invention, there is provided an ATM switch comprising:
a cell processor for detecting an error derived from a cell introduced into a circuit associate portion and for classifying an error cell causing said error from normal cells;
a cell buffer which is a storage device for temporarily, cumulatively storing said cell by forming a queue sequentially connecting said cell classified by said cell processor until said cell is output from said circuit associate portion in response an instruction from a queue controller of said circuit associate portion, and thereby for forming an error queue for cumulatively storing said and other error cells in addition to a normal queue for cumulatively storing said and normal cells, so as to cumulatively store said normal cells and said error cells; and
said queue controller for management of queues including selection of a queue and instruction of an order of said cells taken out from said queues.

According to the error processing method and the ATM switch where the method is employed, cell buffers can store cells together with error information. Therefore, it is possible not only to record information on errors in circuit processors but also to confirm whether the values stored in error cells are normal. Additionally, the contents of error-experienced cells are stored by using the same means as used for ordinary processing, and the ATM switch need not interrupt its ordinary operations when the control CPU reads out the content of the error cells. An error queue is made in the cell buffer prepared to store cells during ordinary processing. Therefore, the ATM switch does not require any particular storage device prepared exclusively for error cells, and can reduce the total number and capacity of storage devices in the circuit exchanger. When cells produce errors consecutively, error cells are connected in sequence to the error queue, and stored and controlled collectively in the cell buffer. Therefore, contents of error cells can be connected in a single storage device, without using any additional storage device, and the storage device resource can be used effectively. Even when a plurality of cell processors are used, it is not necessary that respective cell processors individually have their own devices for storing error-contained cells. The control CPU is configured to investigate the contents of cells sequentially taken out from the error queue to which the cells are connected. Therefore, the throughput of the ATM switch never drops even when an error occurs.

When the cell buffer is a memory located outside the circuit associate portion and connected thereto, the manufacturing cost of the circuit associate portion can be reduced, and any memory with any desired capacitance can be selected to decrease the cost of the entire system. When a number of errors occur successively in the circuit associate portion, a large capacity cell buffer will be required to store the contents of errors. However, if the cell buffer is an externally added memory, the circuit associate portion itself need not be reconstructed, and the cost for increasing the memory capacity is not large.

If the system is configured to write the nature of an error in an error cell causing the error when the error derived from the cell occurs in the cell processor, no particular storage device need not be used to hold the nature of the error during the period after the error occurs until the control CPU reads out the content of the error. That is, if the nature of the error is written directly in the error-contained cell, then the relation between the nature of the error and the content of the error-contained cell is hold completely. On the other hand, since the error-contained cell is held in the cell buffer, even when some errors occur consecutively, no confusion occurs regarding the relation between the nature of the error and the error-contained cell.

The queue controller may be configured to give an error notice regarding the presence of any error to the control CPU (central processing unit) configured to read out contents of error cells, only while the error cell is connected to the error queue in the cell buffer. In this case, the control CPU may be configured to receive the error notice only when the cell is connected to the error queue and not to receive from each cell processor in the circuit associate portion. Thus, the error notifying procedure can be simplified. In this case, since the control CPU receives a notice on an error only from the queue controller, its behavior after the error notice can be limited to the reading of the cell from the error queue. Therefore, the system can save the software resource for operations of the control CPU after receiving an error notice until judging the nature of the error.

Some rows of error queues may be provided for different natures of errors or degrees of seriousness. In this case, by connecting an error cell to appropriate one of error queues prepared for the nature of the error, cells can be controlled for different degrees of seriousness and different natures of errors. That is, the control CPU can select an error queue to be read, depending only upon the nature of the error, regardless of the time and piece where the error occurred.

### BRIEF DESCRIPTION OF THE DRAWINGS

Fig. 1 is a block diagram showing a construction of an ATM switch;
Fig. 2 is a block diagram showing a conventional circuit associate portion;
Fig. 3 is a diagram schematically showing a construction of a cell processor and a cell buffer in a circuit associate portion of an ATM switch configured for pipeline processing of cells;
Fig. 4 is a diagram schematically showing a process of pipeline processing of cells by a cell processor and a cell buffer in a circuit associate portion of an ATM switch;
Fig. 5 is a diagram illustrating an error processing method in an ATM switch and a construction of the ATM switch according to the first embodiment of the invention;
Fig. 6 is a diagram schematically showing the error processing method and a process thereof in the ATM switch according to the first embodiment of the invention;
Fig. 7 is a diagram illustrating an error processing method in an ATM switch and a construction of the ATM switch according to the second embodiment of the invention;
Fig. 8 is a diagram schematically showing the error processing method and a process thereof in the ATM switch according to the second embodiment of the invention; and
Fig. 9 is a diagram schematically showing the cell data designation in the cell buffer by the queue controller.

### DESCRIPTION OF THE PREFERRED EMBODIMENTS

Explained below are error processing methods in ATM switches and constructions of the ATM switches embodying the invention with reference to the drawings. Error processing methods and ATM switches according to the invention are characterized in the mode of error processing and the construction of a circuit associate portion. The general construction of the ATM switch itself is substantially the same as that of a conventional ATM switch, and its explanation is omitted here.

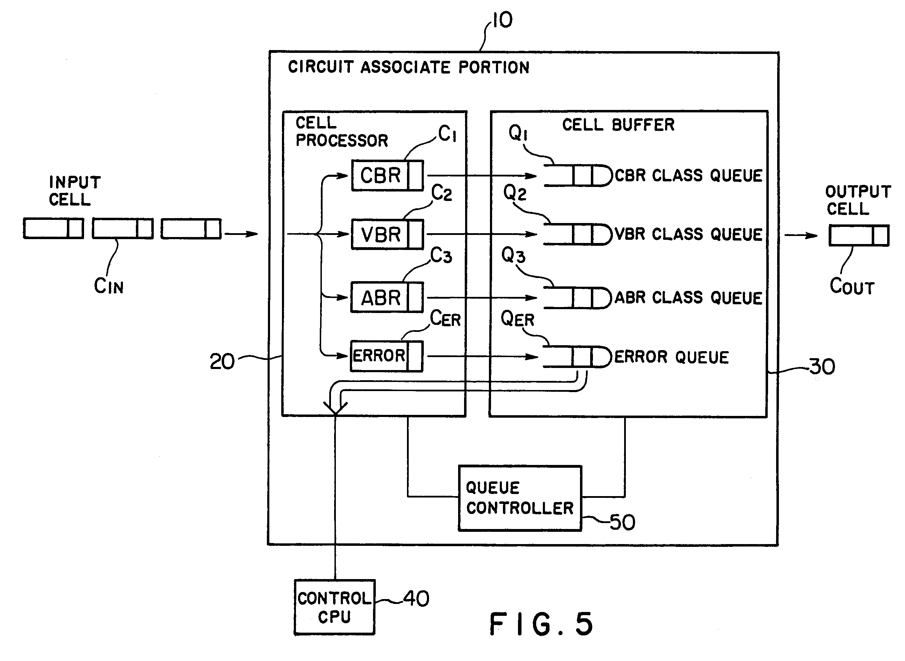

Fig. 5 is a diagram showing an error processing method in an ATM switch and a construction of the ATM switch taken as the first embodiment of the invention. More specifically, it is a block diagram roughly showing the construction of a circuit associate portion and a process of its behaviors.

The circuit associate portion 10 shown in Fig. 5 includes a cell processor 20 for applying predetermined processing to cells, cell buffer 30 for temporarily, cumulatively storing cells, and queue controller 50 for management of queues, such as selection of a queue, instruction of a sequence of cells extracted from a queue. Further connected to the cell processor 20 is a control CPU 40 for reading out error information of cells.

The most important feature of error processing methods and ATM switches according to the invention lies in the use of an additional queue exclusive for error cells to control error-contained cells, in addition to queues of different classes prepared for different qualities of circuits through which cells are transmitted.

The cell processor 20 of the circuit associate portion 10 includes means for connecting error-contained cells to the error queue Q_{ER}, in addition to means for identifying a circuit class assigned to a certain input cell. All cells C_{IN} input into the circuit associate portion 10 undergo predetermined processing in the cell processor 20, and normal cells without errors are classified into different classes for different qualities of circuits for transmitting the input cells C_{IN} and for output ports of a routing switch (for example, a cell C1 of the CBR class, cell C2 of the VBR class and call C3 of the ABR class), then controlled in form of queues (for example, queue Q1 for the CBR class, queue Q2 for the VBR class, and queue Q3 for the ABR class), and once stored cumulatively in the cell buffer 30. The order of cells taken out from the cell buffer 30 is determined so that a cell connected to a queue of a class with a higher quality level be released preferentially. The order of cells taken out from a queue of a class, is determined by a list structure collecting combinations of addresses in the cell buffer with next pointers. The queue controller 50 for controlling queues preferentially selects a high-class queue, and instructs extraction of a cell therefrom.

On the other hand, when any error occurs in the circuit associate portion while a cell is processed, the cell is connected as an error cell to the error queue Q_{ER} exclusive for error cells. The control CPU 40 connected to the circuit associate portion 10 includes means for extracting a cell connected to the error queue Q_{ER} and for reading its content, and can investigates the nature of the error. In case of an ATM cell, circuit information, etc. can be known from the header portion of a cell, and pay-out information, etc. can be known from the pay-load portion of a cell.

Typically, the cell buffer 30 is made of a storage device having a much larger capacity than a storage device used in a conventional cell processor for storing error cells. Therefore, any error cell causing an error can be stored together with their error information in a single storage device without being sent out to the exterior. In this manner, it is possible not only to record information on errors occurring in the circuit associate portion 10 but also to confirm whether a value recorded in an error cell is normal or not.

It is sufficient for the control CPU 40 to sequentially read out error cells connected to the error queue, it need not interrupt ordinary operations even when investigating the content of the error, and therefore prevents a decrease in throughput of the ATM switch when any error occurs. Since error-contained cells and normal cells are stored in a common cell buffer, the hardware resource of the storage device can be used effectively.

Upon accumulating input cells in the cell buffer, the queue controller 50 first confirms whether a circuit class assigned to the cell, or the cell itself, has experienced an error, and then connects it to an appropriate queue. A cell, which experienced an error generated in the circuit associate portion 10, is connected as an error cell C_{ER} to the error queue Q_{ER} exclusive for error cells. Even during normal processing in the circuit associate portion 10, the queue controller 50 discriminates the circuit class to which the cell belongs, and selects the queue to which the cell should be connected. Therefore, the queue controller 50 can perform the behavior to connect the error cell C_{ER} to the error queue Q_{ER} in the same process as the ordinary processing.

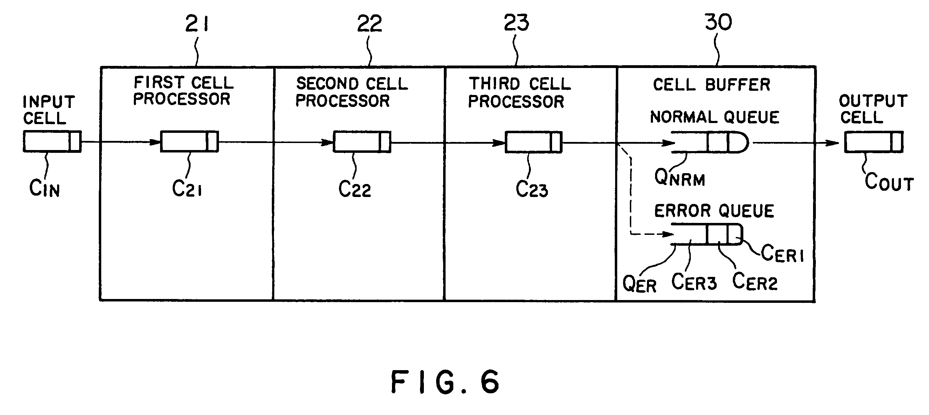

Fig. 6 is a diagram schematically showing the error processing method in the ATM switch and the process thereof according to the first embodiment of the invention. More specifically, it is a diagram schematically showing the process of the processing in the circuit associate portion. The cell processor shown here includes first, second and third cell processors 21, 22, 23 for applying predetermined processing on cells, respectively, and a cell buffer 30 for temporary storage of cells is connected to the cell processor. The cell buffer can stores 32000 pieces of cell data, each piece being 64 bites, and its total capacity is approximately 2 MB.

The first, second and third cell processors 21, 22, 23 execute predetermined processing of input cells C21, C22, C23. If these cells are normal cells with no error, they are connected to a normal queues Q_{NRM} corresponding to the quality classes of the cells. However, if they contain errors, they are connected to the error queue Q_{ER} exclusive for errors. Therefore, error-contained cells are never sent out or discarded directly to the exterior of the circuit associate portion.

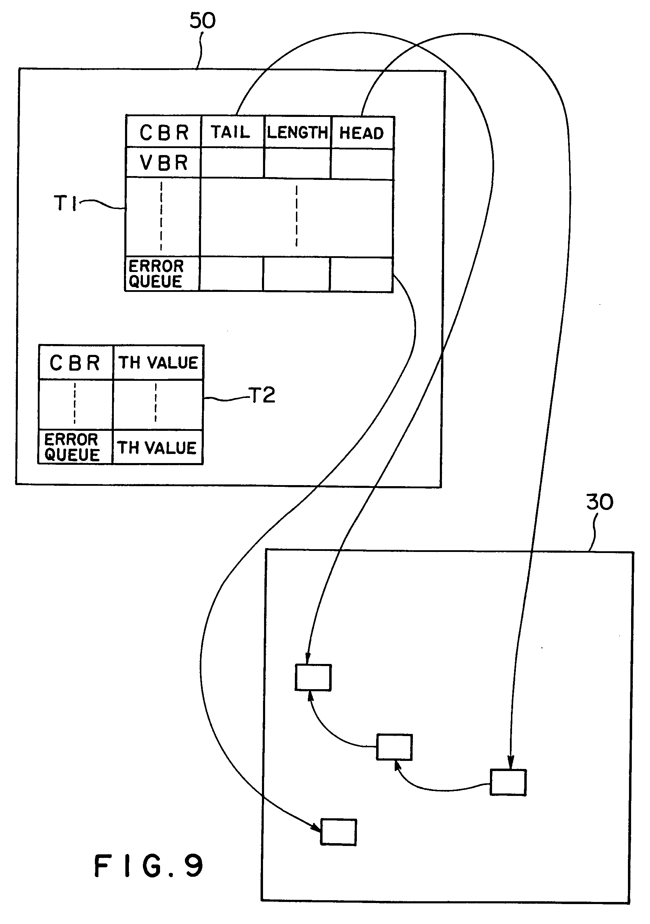

Fig. 9 is a diagram schematically showing the cell data designation in the cell buffer 30 by the queue controller 50. The cell buffer 30 does not have fixed storing areas assigned for classes and error, and cells are sequentially stored in the cell buffer 30 on demand. Addresses of stored cells are designated by the queue controller. As shown in Fig. 9, the queue controller 50 has a table T1 for designating, for example, addresses of the CBR queue, VBR queue and error queue. In the table, a tail, a length and a head are respectively designated for each queue. The tail is an address of the latest cell data, the length is a number of cell data and the head is an address of the earliest cell data.

Since each cell data has a designation address of next cell data, the queue controller can designate all the related cell data.

In the queue controller 50, there is provided another table T2 which stores permissible numbers (threshold values) of cell data for the classes and for the error. If a new designation of cell data exceeds the value, necessary operation will be performed. For example, if the number of error cells exceeds the predetermined number, the control CPU 40 halts the operation of the ATM switch.

In receipt of a notice on an error from the cell buffer 30, the control CPU 40 shown in Fig. 5 sequentially reads out error cells C_{ER1}, C_{ER2} and C_{ER3} from the error queue Q_{ER}, reviews their contents, and identifies natures of the errors with reference to the contents. After the review of the contents, the error cells are finally sent out or discarded to the exterior of the circuit associate portion.

In the error processing and the ATM switch according to the first embodiment of the invention, configured to store the content of a error-experienced cell by commonly using means prepared for normal processing, normal operations need not be interrupted while the control CPU 40 reads the content of the error cell. Since the error queue Q_{ER} is formed in the cell buffer 30 prepared for accumulating cells during normal operations, it is not necessary to use any additional storage device exclusive for error cells, and the number and the capacity of the storage devices in the circuit exchanger 10 can be reduced.

When cells generates errors consecutively, error cells are sequentially connected to the error queue Q_{ER} and stored in the cell buffer 30 for collective management therein. Therefore, contents of error cells can be collected in a single storage device, without using no additional storage device, and the storage device resource can be used effectively. Even when the cell processor includes a plurality of cell processors, it is not necessary that respective cell processors individually have their own devices for storing error-contained cells. The control CPU is configured to investigate the contents of cells sequentially taken out from the error queue to which the cells are connected. Therefore, the throughput of the ATM switch never drops even when an error occurs.

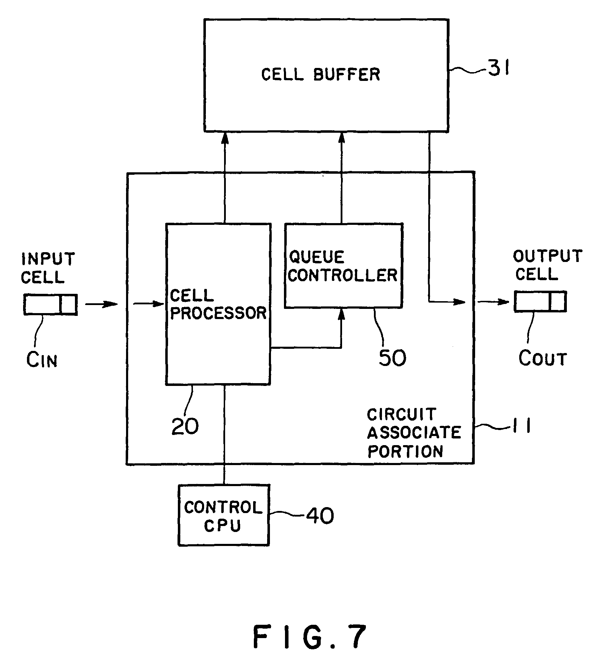

Fig. 7 is a diagram schematically showing an error processing method in the ATM switch and a construction of the ATM switch. More specifically, it is a diagram schematically showing the construction of a circuit associate portion and an external cell buffer.

The circuit associate portion 11 shown in Fig. 7 includes a cell processor 20 for applying predetermined processing to cells, and a queue controller 50 responsive to a notice from the cell processor 20 to execute queue management, such as selection of a queue, instruction of the order of cells taken out from a queue. A cell buffer 31 for temporarily, cumulatively storing cells is provided outside the circuit associate portion 11 and connected thereto. Furthermore, a control CPU 40 for reading out error information, etc. of cells is connected to the cell processor 20.

The circuit associate portion 11 used in the error processing method and the ATM switch according to the second embodiment is different from those of the first embodiment in that the cell buffer 31 for cumulatively storing cells introduced to the circuit associate portion 11 and the storage device for storing queue connecting information are memory devices located outside the circuit associate portion 11 and connected thereto.

The circuit associate portion 11 is configured to store post-processing cells, including error-experienced cells, in the external memory, namely, the cell buffer 31. Therefore, the function of the circuit associate portion 11 and the function of the storage device for maintaining cell contents are separated.

The circuit associate portion 11 according to the second embodiment of the invention stores contents of error-experienced cells in the cell buffer 31 which cumulatively stores normal input cells, as well, and it does not require individual devices for storing error cells in a plurality of cell processors within the circuit associate portion 11. On this respect, the second embodiment is the same as the first embodiment. The second embodiment, however, can provide a more economical ATM switch because an externally connected memory is used as the cell buffer 31. That is, by using an external memory as the cell buffer 31, the manufacturing cost of the circuit associate portion 11 itself can be reduced, and any memory having any desired capacitance can be chosen to reduce the expense for the entire system. When a number of errors occur successively in the circuit associate portion, a large capacity cell buffer will be required to store the contents of errors. However, when the cell buffer is an externally added memory, the circuit associate portion itself need not be reconstructed, and the cost for increasing the memory capacity is not large.

An error processing method and an ATM switch according to the third embodiment of the invention additional means, in addition to those used in the first and second embodiments, namely, means provided in the cell processor of the circuit associate portion to write natures of errors in the error-experienced cells under processing when such errors occur while the cells introduced into the cell associate portion are processed.

When the cell processor detects any error in the circuit associate portion, it adds information identifying the nature of the error to the cell under processing. When the queue controller acknowledges that on input cell is an error cell upon accumulating it in the cell buffer, it connects the error cell to the error queue exclusive for error cells. Upon receipt of an error notice, the control CPU reads out the error cell from the error queue, and confirms the nature of the error together with the content of the cell.

In a conventional arrangement of the type where normal operations of the circuit associate portion is not interrupted when an error occurs, it is sometimes impossible to identify the relation between the nature or an error and the error-contained cell, as explained before. That is, unless the nature of the error is stored until the control CPU reads out the content of the error-contained cell, this problems occurs especially when errors occur successively.

In the arrangement according to the third embodiment of the invention, it is not necessary to use any particular storage device for holding natures of errors after an error occurs until the control CPU reads out the content of the error. That is, since the nature of the error is written directly in the error-contained cell itself, the relation between the nature of the error and the content of the error-contained cell is kept completely. Additionally, since error-contained cells are stored in the cell buffer, no confusion occurs regarding the relation between natures of errors and error-contained cells even when errors occur successively.

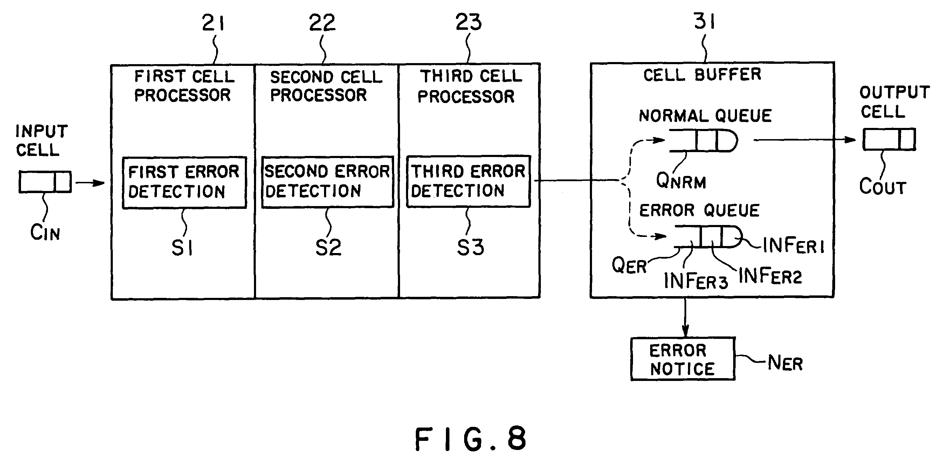

Fig. 8 is a diagram schematically showing an error processing method in an ATM switch and a process thereof according to the fourth embodiment of the invention. More specifically, it is a diagram schematically showing a construction of a circuit associate portion and a process of the processing in the circuit associate portion. A cell processor shown here includes first, second and third cell processors 21, 22, 23 for applying predetermined processing on cells, respectively, and an external cell buffer 31, which is an external memory, is provided for temporarily storing cells.

The circuit associate portion 11 used in the error processing method and the ATM switch according to the third embodiment is different from those of the foregoing embodiments in that the queue controller for management of queues, such as selection of a queue and instruction of the order of cells taken out from a queue, includes means for informing the control CPU that a cell is connected to an error queue exclusive for error-experienced cells.

The first, second and third cell processors 21, 22, 23 execute predetermined processing of input cells C21, C22, C23, and conduct first, second and third error detections S1, S2 and S3. However, these cell processors 21, 22, 23 do not inform the control CPU of occurrence of errors. Instead, only when a cell is connected to the error queue Q_{ER}, the queue controller gives an error notice N_{ER} to the control CPU to inform the occurrence of the error. The error notice N_{ER} indicates that the length of the error queue is not "0", and the control CPU continues to read cells from the error queue until the length of the error queue becomes "0". After the CPU control CPU read out some of contents INF_{ER1}, INF_{ER2}, INF_{ER3}, et seq. of error cells containing error information, etc. from the error queue and when no cell connected to the error queue exists, the error notice N_{ER} to the control CPU is stopped, and the control CPU ceases the reading from the error queue.

Since the control CPU is configured not to receive from each cell processor in the circuit associate portion but to receive an error notice N_{ER} only when a cell is connected to the error queue, the error notifying procedure can be simplified. In this case, since the control CPU receives an error notice N_{ER} only from the queue controller, its behavior after the error notice can be limited to the reading of the cell from the error queue. Therefore, the system can save the software resource for operations of the control CPU after receiving an error notice until judging the nature of the error.

An error processing method and an ATM switch according to the fifth embodiment is a modified version of the foregoing embodiments, which uses a plurality of error queues prepared for error-contained calls different in seriousness of errors in nature of errors.

A queue controller for controlling queue information of cells accumulated in the cell buffer connects a cell having caused an error to one of error queues corresponding to the seriousness of the error and the nature of the error. The queue controller informs the control CPU of minimum data for identifying the nature of the error, depending upon the classified error.

Although the fourth embodiment enables collective management of places and times of errors, the fifth embodiment enables management of cells for different seriousness and natures of errors by connecting error cells to different error queues corresponding to the natures of the errors. That is, the control CPU can select any error queue, only referring to the nature of on error, regardless of the time and place of the error.

The embodiments explained above can be applied to both or one of the input circuit associate portion and the output circuit associate portion. When the construction of the invention is applied to only one of the input and output circuit associate portions, it is recommended that this structure is used in one with a higher frequency of errors at its input side.

## Claims

1. An error processing method in an ATM switch comprising:
a first process for detecting an error derived from a cell introduced into a circuit associate portion in a cell processor of said circuit associate portion, and for classifying an error cell causing said error from normal cells; and
a second process for making a queue to which said cell classified by said cell processor is connected until said cell is output from said circuit associate portion in response to an instruction from a queue controller of said circuit associate portion, to form an error queue for storing said and other error cells in addition to a normal queue for staring said and other normal cells, and to cumulatively store said normal cells and said error cells.

2. The error processing method in an ATM switch according to claim 1 wherein, when said error derived from said cell is detected in said cell processor, the nature of said error is written in said error cell causing said error.

3. The error processing method in an ATM switch according to claim 1, wherein said queue controller gives an error notice informing the presence of said error cell to a control central processing unit for reading out the contents of error cells only in the duration where said error cell is connected to said error queue in said cell buffer.

4. The error processing method in an ATM switch according to claim 1, wherein a plurality of said error ques are provided for different natures and seriousness of errors.

5. The error processing method in an ATM switch according to claim 1, wherein said circuit associate portion forms one or both of an input circuit associate portion and an output circuit associate portion in said ATM switch.

6. An ATM switch comprising:
a cell processor for detecting an error derived from a cell introduced into a circuit associate portion and for classifying an error cell causing said error from normal cells;
a cell buffer which is a storage device for temporarily, cumulatively storing said cell by forming a queue sequentially connecting said cell classified by said cell processor until said cell is output from said circuit associate portion in response an instruction from a queue controller of said circuit associate portion, and thereby for forming an error queue for cumulatively storing said and other error cells in addition to a normal queue for cumulatively storing said and normal cells, so as to cumulatively store said normal cells and said error cells; and
a queue controller for managing of queues including selection of a queue and instruction of an order of said cells taken out from said queues.

7. The ATM switch according to claim 6, wherein said cell buffer is a memory located outside of said circuit associate portion and connected thereto.

8. The ATM switch according to claim 6, wherein said cell processor includes means for writing the nature of said error in said error cell causing said error when it detects said error derived from said cell.

9. The ATM switch according to claim 6, wherein only in the duration where said error cell is connected to said error queue in said cell buffer, said queue controller gives an error notice informing the presence of said error cell to a control central processing unit connected to or provided in said ATM switch to read out contents of error cells.

10. The ATM switch according to claim 6, wherein a plurality of said error queues are provided for different natures of errors or for different seriousness of errors.

11. The ATM switch according to claim 6, wherein said circuit associate portion forms one or both of an input circuit associate portion and an output circuit associate portion in said ATM switch.

12. The ATM switch according to claim 7, wherein said queue controller further comprises a first management table for storing a tail address, number of cells and a head address for each class or error in the cell buffer.

13. The ATM switch according to claim 12, wherein said queue controller further comprises a second management table for storing permissible maximum cell numbers for each class or error in the cell buffer.
